# EUROPEAN PATENT APPLICATION

(11) **EP 1 821 519 A1**
(43) Date of publication of application: **22.08.2007**
(21) Application number: 07102571.2
(22) Date of filing: 16.02.2007
(51) Int. Cl.: H04N 5/225

(54) **Image capturing apparatus and control method therefor**

(30) Priority: 17.02.2006 JP 2006041658
(71) Applicant: Canon Kabushiki Kaisha, Ohta-Ku, Tokyo 146-8501 (JP)
(72) Inventor: Onuki, Ichiro, Ohta-ku, Tokyo (JP)
(74) Representative: Sharp, Alan Cooper

(57) **Abstract**

An image capturing apparatus includes an image sensor (15) which photo-electrically converts an object image, an optical element(14) arranged nearer to an object than a light-receiving section of the image sensor, a foreign substance removing member(27) which removes a foreign substance adhering to the surface of the optical element, and a display unit(30) which displays the status of foreign substance removal by the foreign substance removing member using a video image acquired by the image sensor during the operation of the foreign substance removing member. This invention can notify a photographer of the progress status of the dust removal process.

## Description

### BACKGROUND OF THE INVENTION

### Field of the Invention

The present invention relates to a technique for notifying a photographer of the progress status of a dust removal step in an image capturing apparatus, which has a function of removing a foreign substance such as dust adhering to an optical element of an image capturing apparatus comprising an image sensor.

### Description of the Related Art

A digital camera which captures a still or moving image using a photographing optical system and an image sensor such as a CCD or C-MOS sensor, generally comprises movable mechanisms such as a zoom optical system, focus adjusting optical system, shutter, aperture stop (iris), and quick return mirror. Abrasion powder discharged from sliding units in these movable mechanisms or foreign substances such as dust which have entered from outside may adhere to a cover glass of the image sensor or the surface of an optical low-pass filter or infrared cut filter arranged near the image sensor. If the electronic camera with adhering dust is used to take a picture, not only an object image but also the shadow of the dust is captured on the image sensor. This may result in an image with poor quality.

In view of this, there has been proposed a technique of detecting the status of dust adhesion and notifying a photographer of the necessity for dust removal, and a technique of executing a dust removal operation in accordance with the photographer's operation with an image capturing apparatus having a dust removal function.

For example, Japanese Patent Application Laid-Open No. 2003-23563 discloses the following technique. That is, a digital single-lens reflex camera includes an illumination LED at the bottom surface of a mirror box. The camera performs an image capturing operation by illuminating the image sensing plane in a mirror-up, shutter open state, and displays the dust adhesion amount via dust detection and weight calculation.

Japanese Patent Application Laid-Open No. 2004-32191 discloses a technique of vibrating a dustproof optical member disposed between an optical system and an image sensor to generate a bending traveling wave by the dustproof optical member, thus removing dust adhering to its surface.

Japanese Patent Application Laid-Open No. 2004-40231 discloses a technique of vibrating a dustproof optical member disposed between an optical system and an image sensor at a frequency within the audible range of human beings, thus notifying a photographer that a dust removal operation is in progress.

Unfortunately, the above known techniques pose the following problems.

Even though the apparatus disclosed in Japanese Patent Application Laid-Open No. 2003-23563 displays the degree of adhesion of dust, it has no dust removing mechanism. If the photographer determines that dust removal is necessary, he/she must manually clean dust off the surface of the optical element.

The apparatus disclosed in Japanese Patent Laid-Open Application No. 2004-32191 has no dust adhesion status detection function. This makes it difficult for the photographer to properly determine the necessity of dust removal.

Even though the apparatus disclosed in Japanese Patent Application Laid-Open No. 2004-40231 allows the photographer to recognize that a dust removal step is in progress, he/she cannot know the progress status of the dust removal step or the time required for completion of the removal step. This makes it difficult to predict the time when the apparatus becomes ready for image capturing. In addition, like Japanese Patent Application Laid-Open No. 2004-32191, this apparatus has no dust adhesion status detection function. This makes it difficult for the photographer to properly determine the necessity of dust removal.

### SUMMARY OF THE INVENTION

The present invention has been made in consideration of the above problems, and has as its object to make it possible to accurately notify a photographer of the progress status of dust removal.

In order to address the above problems and to achieve the above object, according to a first aspect of the present invention, there is provided an image capturing apparatus as specified in claims 1 to 3.

According to a second aspect of the present invention, there is provided a control method for an image capturing apparatus as specified in claim 4.

According to a third aspect of the present invention, there is provided a computer program as specified in claim 5.

Further features of the present invention will become apparent from the following description of exemplary embodiments (with reference to the attached drawings).

### BRIEF DESCRIPTION OF THE DRAWINGS

Fig. 1 is a sectional view showing the structure of a camera according to a first embodiment of the present invention;

Figs. 2A to 2D are views for explaining a cleaning unit according to the first embodiment of the present invention;

Fig. 3 is a block diagram showing the circuit arrangement of the camera according to the first embodiment of the present invention;

Figs. 4A to 4D are flowcharts showing a dust removal step according to the first embodiment of the present invention;

Fig. 5 is a sectional view showing the operation of the camera while the dust removal step is in progress according to the first embodiment of the present invention;

Figs. 6A and 6B are views for explaining the result of an enlargement process of a dust image according to the first embodiment of the present invention;

Figs. 7A to 7D are charts for explaining a method of enlarging a dust image according to the first embodiment of the present invention;

Fig. 8 is a sectional view showing the structure of a camera according to a second embodiment of the present invention;

Fig. 9 is a flowchart showing a dust removal step according to the second embodiment of the present invention;

Fig. 10 is a sectional view showing the structure of a camera according to a third embodiment of the present invention;

Fig. 11 is a perspective view for explaining a cleaning unit according to the third embodiment of the present invention;

Figs. 12A to 12D are flowcharts showing a dust removal step according to the third embodiment of the present invention;

Figs. 13A and 13B are views showing the result of an enlargement process of a dust image according to the third embodiment of the present invention;

Figs. 14A to 14E are charts for explaining a method of enlarging a dust image according to the third embodiment of the present invention;

Fig. 15 is a sectional view showing the structure of a camera according to a fourth embodiment of the present invention; and

Fig. 16 is a flowchart showing a dust removal step according to the fourth embodiment of the present invention.

### DESCRIPTION OF THE EMBODIMENTS

Preferred embodiments of the present invention will be described in detail below with reference to the accompanying drawings.

### (First Embodiment)

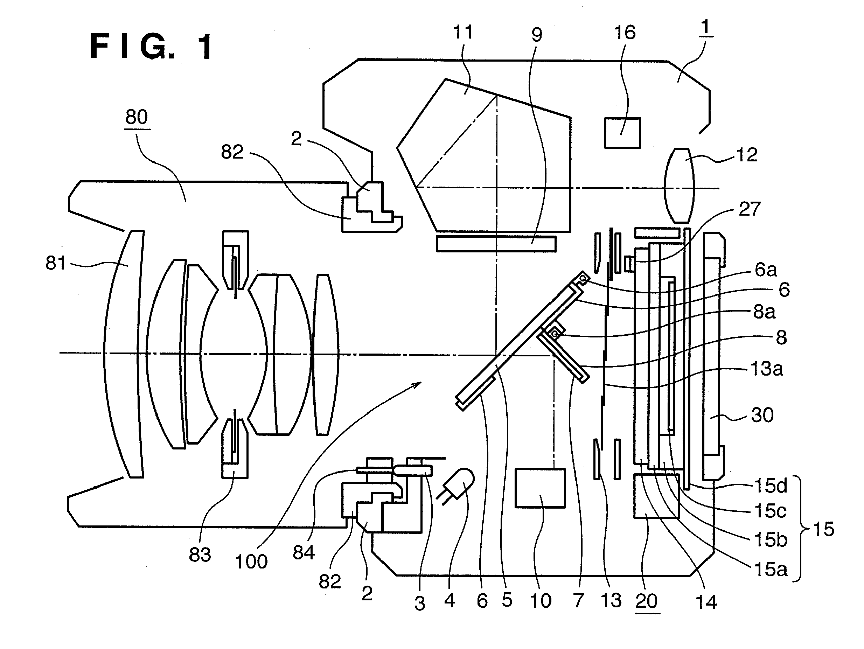

Figs. 1 to 7D are views for explaining the first embodiment of the present invention.

Fig. 1 is a sectional view showing the structure of a camera serving as an image capturing apparatus according to the first embodiment of the present invention. Fig. 1 shows a state in which a digital single-lens reflex camera system (which includes a camera main body and exchangeable lens) is ready for image capturing.

Referring to Fig. 1, reference numeral 1 denotes a camera main body. A camera mount 2 and lens mount 82 fix an exchangeable lens 80 in a detachable fashion to the camera main body 1. When a camera-side contact point 3 comes into contact with a lens-side contact point 84, a camera control circuit and lens control circuit (not shown) are electrically connected in order to supply power from the camera main body 1 to the exchangeable lens 80, and perform communication for lens control.

A light beam transmitted through a photographing optical system 81 of the exchangeable lens 80 strikes a main mirror 5 of the camera. The light beam reflected by the main mirror 5 serving as a half-mirror is guided to a viewfinder screen 9 and forms an object image on it. A photographer can observe the object image on the viewfinder screen 9 via a pentagonal roof prism 11 and eyepiece 12.

The light beam transmitted through the main mirror 5 is reflected downward by a submirror 7 and guided to a focus detection unit 10. The focus detection unit 10 detects the focus shift amount, i.e., the defocus amount of the photographing optical system 81, and calculates a lens drive amount for driving the photographing optical system 81 such that it becomes in-focus. The resultant lens drive amount is sent to the exchangeable lens 80 via the contact points 3 and 84. The lens 80 controls a motor (not shown) to drive the photographing optical system 81 to perform focus adjustment.

A main mirror holding frame 6 fixes the main mirror 5 with an adhesive. A hinge shaft 6a rotatably and axially supports the main mirror 5 with respect to a mirror box 100. A submirror holding frame 8 fixes the submirror 7 with an adhesive. A hinge shaft 8a rotatably and axially supports the submirror holding frame 8 with respect to the main mirror holding frame 6.

A shutter (such as for example a focal-plane shutter) 13 is arranged on the rear side of the submirror 7. Normally, a shutter front curtain 13a of the shutter 13 is closed, i.e., shields an image sensor (to be described later) from light. An optical filter 14, which integrates an optical low-pass filter and infrared cut filter, is arranged on the rear side of the shutter 13. In image capturing, a light beam transmitted through the optical filter 14 strikes an image sensor 15 arranged on the further rear side.

The image sensor 15 includes a cover glass 15a, sensor package 15b, sensor chip 15c, and sensor substrate 15d. The image sensor or image capture means here more narrowly indicates the sensor chip 15c, and more broadly indicates an image sensor unit including the components 15a to 15d and even a structure which integrates the image sensor unit and optical filter 14.

Reference numeral 30 denotes a display unit such as an LCD which displays information associated with an image capturing mode of a camera, preview images and images after image capturing, and information associated with the progress status of a dust removal step.

A cleaning unit 20, which removes dust adhering to the surface of the optical filter 14, is arranged on the rear side of the shutter 13 in the space outside the optically effective surface of the optical filter 14. Reference numeral 27 denotes a wiper (described later) which serves as one constituent component of the cleaning unit 20. An LED 4 is an illumination device, e.g., a high-luminance white LED, which illuminates the optical filter 14 and image sensor 15 from the lower surface side of the mirror box 100 to detect the operation status of the cleaning unit 20 and dust adhering to the optical filter 14.

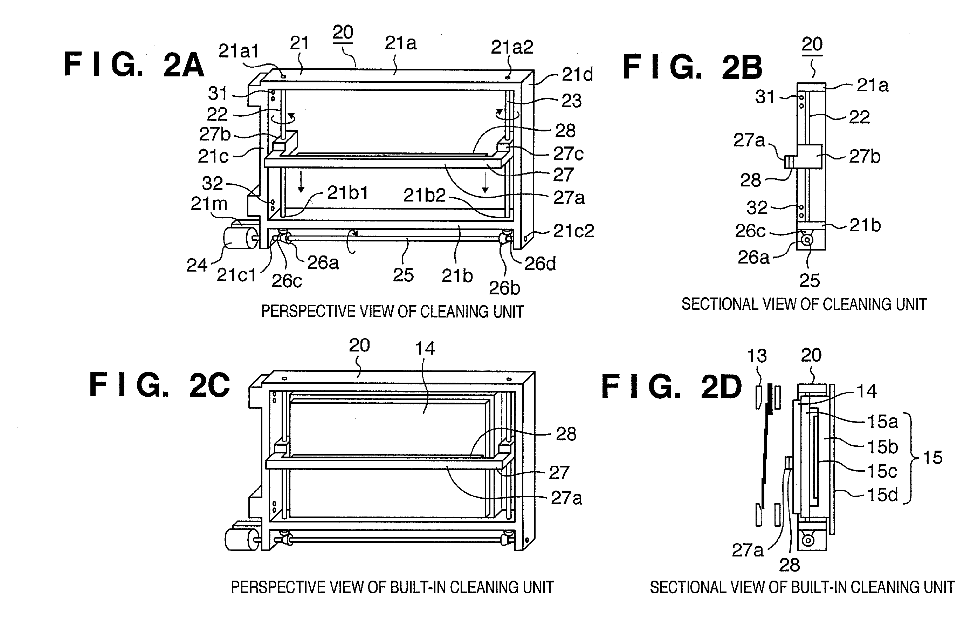

Figs. 2A to 2D are views each showing the structure of the cleaning unit 20. Fig. 2A is a perspective view when the cleaning unit 20 is viewed from the photographing lens side. Fig. 2B is a sectional view of the cleaning unit 20 shown in Fig. 2A. Fig. 2C is a perspective view when the cleaning unit 20 is built in the vicinity of the image sensor 15. Fig. 2D is a sectional view of the cleaning unit 20 shown in Fig. 2C.

Referring to Fig. 2A, reference numeral 21 denotes a frame body, corresponding to a housing of the cleaning unit 20, which includes rectangular plate-like members 21a, 21b, 21c, and 21d surrounding the optical filter 14 to be cleaned, and which holds the following members.

Holes 21a1 and 21a2 are formed at the two ends of the upper frame 21a, while holes 21b1 and 21b2 are formed at the two ends of the lower frame 21b. A lead screw 22 is rotatably inserted in the holes 21a1 and 21b1. A lead screw 23 is rotatably inserted in the holes 21a2 and 21b2. The lead screw 22 has a right-handed thread. The lead screw 23 has a left-handed thread. A motor base 21m is formed at the lower end of the side frame 21c from its outside and fixes a motor 24. Holes 21c1 and 21c2 are formed at the lower ends of the side frames 21c and 21d. The holes 21c1 and 21c2 rotatably hold a motor shaft 25. The motor shaft 25 fixes bevel gears 26a and 26b at its two ends. The lead screws 22 and 23 fix, at their lower ends, bevel gears 26c and 26d. The bevel gears 26a and 26c mesh with each other. The bevel gear 26b and 26d mesh with each other. Reference numeral 27 denotes a wiper. A support body 27a at the middle portion of the wiper 27 fixes a flock-coated paper 28 with an adhesive. Nut portions 27b and 27c at the two ends of the wiper 27 threadably engage with the lead screws 22 and 23. Preferably, the flock-coated paper 28 is a member obtained by implanting microfibers having a diameter of about 10 µm and a length of about 200 µm in an adhesive sheet having a thickness of about 50 µm at small intervals using an electrostatic flocking method. However, the flock-coated paper 28 may comprise another member having dust removing capability, such as unwoven fabric or blush- or velvet-like cloth.

Wiper position detection units 31 and 32 are mounted at the upper and lower ends of the side frame 21c. Preferably, each of the wiper position detection units 31 and 32 is a photo-electric sensor such as a photo-reflector. Each of the wiper position detection units 31 and 32 causes a light-receiving section to detect a light beam which is emitted from a projection section and reflected by the nut 27b as an object, and thereby detects whether the nut 27b faces the wiper position detection unit 31 or 32.

With the above arrangement, a current is supplied to the motor 24 to rotate the motor shaft 25 in a direction indicated by an arrow in Fig. 2A so that the lead screws 22 and 23 rotate in directions opposite to each other at the same rotation speed via the four bevel gears 26a to 26d. This rotation drives the nuts 27b and 27c downward at a constant speed to translate the wiper 27 downward.

As shown in Figs. 2C and 2D, the flock-coated paper 28 fixed to the wiper 27 is scanned while being in contact with the surface of the optical filter 14 to ensure removal of foreign substances such as dust adhering to the surface of the optical filter 14. When the wiper 27 reaches the lower end, the wiper position detection unit 32 detects this state and rotates the motor 24 in the reverse direction to move the wiper 27 upward. When the wiper 27 returns to the initial position, i.e., the upper end, the wiper position detection unit 31 detects this state and stops the motor 24. One dust removal operation is thus completed.

The arrangement of the cleaning unit 20 in the camera will be explained.

As shown in Fig. 2D, only the flock-coated paper 28 and the support body 27a of the wiper 27, which are minimum necessary members for dust removal, are arranged on the front side (on the left side in Fig. 2D) of the light beam incident surface of the optical filter 14. Other major components, i.e., the frame body 21 corresponding to a housing, the motor 24 corresponding to a driving unit, the lead screws 22 and 23, the nuts 27b and 27c, and the like are arranged in the following way. That is, they are arranged on the rear side of the light beam incident surface of the optical filter 14 in the space outside the optical filter 14 and the sensor package 15b of the image sensor. This arrangement keeps the interval between the shutter 13 and the sensor chip 15c at a minimum to prevent a decrease in shutter efficiency. The wiper driving mechanism is arranged in a relatively large space outside the optical filter 14 and sensor package 15b to facilitate assurance of sufficient rigidities of the constituent members and assurance that their lengths are long enough to fit in the slide units.
This makes it possible to provide a cleaning unit with a high degree of reliability.

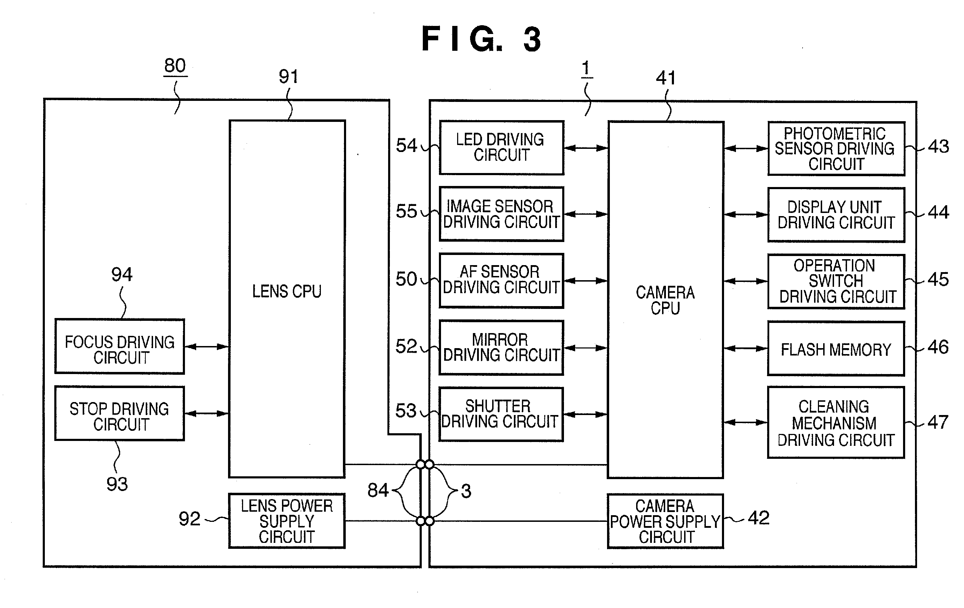

Fig. 3 is a block diagram showing the arrangement of electrical circuits of the camera according to this embodiment. Various circuits incorporated in the camera main body 1 will be explained with reference to Figs. 1 to 2D.

Reference numeral 41 denotes a camera CPU which executes various kinds of control over the camera main body 1, and comprises a calculation unit, ROM, RAM, A/D converter, D/A converter, and communication interface circuit. Reference numeral 42 denotes a camera power supply circuit which includes a secondary battery such as a lithium ion battery, and a booster. Reference numeral 43 denotes a photometric sensor driving circuit which drives a photometric sensor 16 shown in Fig. 1, calculates the photometry result, and transmits the output to the camera CPU 41. Reference numeral 44 denotes a display unit driving circuit which controls the display of the display unit 30. Reference numeral 45 denotes an operation switch driving circuit which determines whether the photographer has operated various operation switches (not shown), e.g., a power supply switch, release (image capturing trigger) switch, and image capturing mode selection switch. Reference numeral 46 denotes a detachable flash memory which records a captured image. Reference numeral 47 denotes a cleaning mechanism driving circuit which controls the driving of the cleaning unit 20 described with reference to Figs. 2A to 2D.

Reference numeral 54 denotes an LED driving circuit which controls whether the LED 4 is ON or OFF. Reference numeral 55 denotes an image sensor driving circuit which controls the image capturing operation of the image sensor 15, and transmits an acquired image signal to the camera CPU 41. Reference numeral 50 denotes an AF sensor driving circuit which drives an AF sensor incorporated in the focus detection unit 10, and transmits a focus detection signal to the camera CPU 41. Reference numeral 52 denotes a mirror driving circuit which drives the main mirror holding frame 6 to protrude/retract the main mirror 5 and submirror 7 to/from the image capturing optical path. Reference numeral 53 denotes a shutter driving circuit which executes driving trigger control of a front curtain and rear curtain of the shutter 13 on the basis of a command signal from the camera CPU 41, and drives a charging motor (not shown) after completing exposure control to charge a shutter curtain traveling spring.

The circuitry of the exchangeable lens 80 will be explained.

Reference numeral 91 denotes a lens CPU which comprises a calculation unit, ROM, RAM, A/D converter, D/A converter, and communication interface circuit. The lens CPU 91 communicates with the camera CPU 41 to transmit/receive various kinds of data and command signals to/from it, and controls the following circuits.

Reference numeral 92 denotes a lens power supply circuit which supplies power provided by the camera power supply circuit 42 to various circuits and an actuator in the lens. Reference numeral 93 denotes a stop driving circuit which controls the aperture diameter of an iris stop 83. Reference numeral 94 denotes a focus driving circuit which drives a focus motor (not shown) to protrude/retract a focus adjusting lens in the optical axis direction.

The camera-side contact point 3 electrically connects to the lens-side contact point 84 while the camera main body 1 is coupled with the exchangeable lens 80 by mounting 2 and 82 (shown in Figure 1).

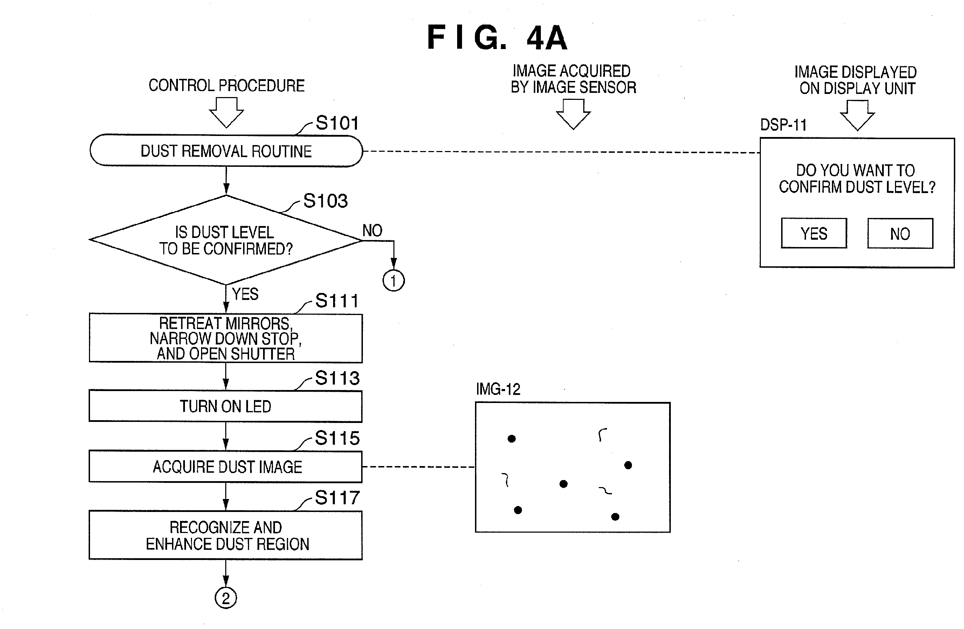

Figs. 4A to 4D are flowcharts for explaining a dust removal step according to this embodiment. Figs. 4A to 4D show the control procedure in the left column, images acquired by the image sensor 15 in the middle column, and the contents of images displayed on the display unit 30 in the right column. Each broken line connects one of the images acquired by the image sensor 15 and the images displayed on the display unit 30 to a corresponding control step. The control procedure shown in Figs. 4A to 4D will be explained with reference to Figs. 1 to 3.

When the photographer operates an operation switch (not shown) to select a dust removal mode while looking at the display unit 30 attached to the back surface of the camera main body 1, a dust removal routine starts in step S101. The display unit 30 displays a window for determining whether to confirm the dust level. Reference symbol DSP-11 indicates the display contents at this time.

If the photographer operates to not confirm the dust level in step S103, the process advances to step S155 to end the dust removal routine. If the photographer operates to confirm the dust level in step S103, the process advances from step S103 to step S111.

In step S111, the main mirror 5 and submirror 7 retreat outside an image capturing light beam. The stop 83 is narrowed down to a minimum stop aperture diameter. The front curtain of the focal-plane shutter travels to open it.

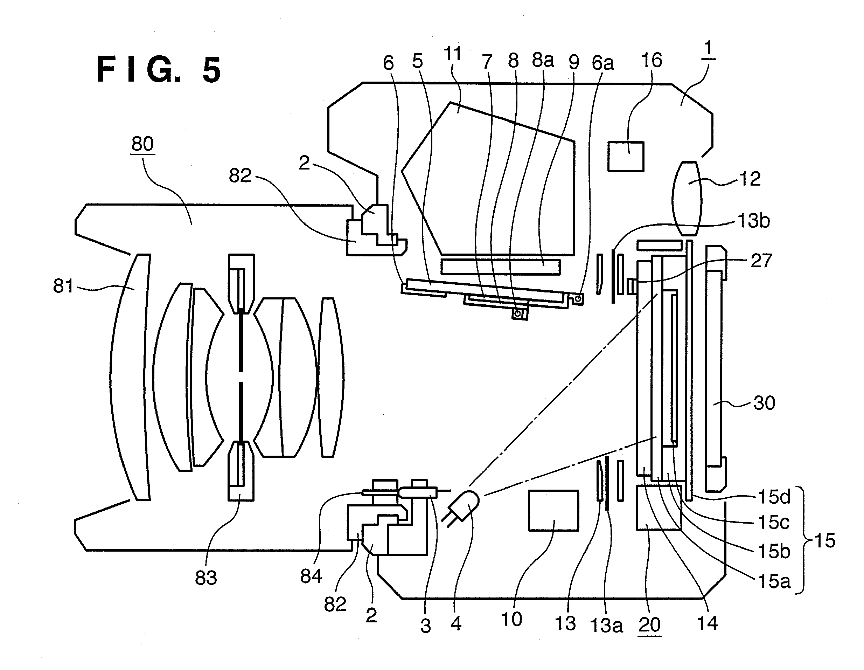

The LED 4 is turned on in step S113. The light from the LED 4 illuminates the sensor chip 15c via the optical filter 14 and the cover glass 15a of the image sensor 15. Fig. 5 shows a sectional view of the camera in this state. The stop 83 is narrowed down to a minimum aperture diameter to almost completely shield the mirror box from external light. The LED 4 has a very small light source area. When dust adheres to the surface of the optical filter 14, the shadow of the dust produced by the illumination light from the LED 4 is projected onto the sensor chip 15c.

In step S115, the image sensor 15 accumulates and reads out images to acquire an image indicated by reference symbol IMG-12. This image represents a state in which black points having various shapes corresponding to the shadows of dust particles adhering to the surface of the optical filter 14 scatter in a light region almost uniformly illuminated by the LED 4.

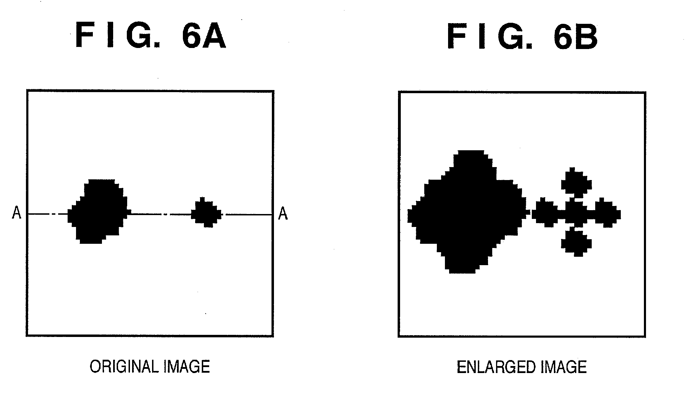

In step S117, a dust region is extracted from the image acquired in step S115 and a display image is enhanced. More specifically, a reference image (indicated by reference symbol IMG-11; not shown), which is acquired during the manufacturing of the camera main body 1, i.e., at a time when the camera main body 1 is free of any dust adhesion, and stored in the ROM, is read out. The difference between the reference image IMG-11 and the image IMG-12 acquired in step S115 is calculated to extract dust which has adhered after manufacturing. The dust level (a value which expresses the dust amount, such as the number of dust portions) is then calculated. Since a technique disclosed in Japanese Patent Application Laid-Open No. 2003-23563, which was filed by the present applicant, is available as a practical method, a detailed description thereof will be omitted. The extracted dust image undergoes dust portion enlargement and contrast enhancement. A practical approach to these processes will be described later with reference to Figs. 6A to 9.

In step S119, the display unit 30 blinks the dust portions in the enlarged image to notify the photographer of the status of dust adhesion (DSP-12).

In step S121, the display unit 30 displays the dust level calculated in step S117 (DSP-13). In this embodiment, the display unit 30 quantitatively displays, using bar graphs and/or numerical values, both a dust level recognized previously and a dust level recognized presently. The display unit 30 also displays, at the lower portion of the display window, a button for selecting whether to execute cleaning. That is, the photographer compares previous and present dust levels, and instructs whether to execute the cleaning step via the selection button.

If the photographer selects that the cleaning operation is unnecessary ((No) in step S123), the process advances to step S155 to end the dust removal routine. If the photographer selects to execute the cleaning step ((Yes) in step S123), the process advances to step S131.

In step S131, the wiper 27 of the cleaning unit 20 starts driving. In step S133, moving images during wiper driving are acquired (IMG-13). In step S135, the display unit 30 sequentially displays the acquired moving images (DSP-14). The shadow of the wiper 27 moves on the window. The photographer can easily and visually recognize the progress status of the cleaning step, and review the process of removing dust by the passage of the wiper 27. When the photographer takes a picture of an object using the exchangeable lens 80, an inverted image is formed on the image sensor 15. The display unit 30 turns the image upside down to display a normal, erect object image. In this embodiment, however, the wiper 27 starts scanning from the upper side in the camera, so the display unit 30 displays a non-inverted image. The photographer can properly recognize that the wiper is driven downward.

In step S137, the wiper 27 returns to the initial position, i.e., the upper side in Figs. 2A to 2D after it is determined that the wiper 27 has completed downward scanning.

In step S139, a dust image is acquired in the same manner as in step S115 (IMG-14). In step S141, a dust image is recognized and enhanced in the same manner as in step S117. In step S143, the display unit 30 displays the status of dust adhesion after the cleaning step in the same manner as in step S119 (DSP-15). This window allows the photographer to determine the region and amount of residual dust.

In step S145, the display unit 30 displays the dust level recognized in step S141 in the same manner as in step S121 (DSP-16). In this embodiment, the display unit 30 quantitatively displays, using bar graphs and/or numerical values, both dust levels before and after cleaning. When the dust level after cleaning is equal to or higher than a predetermined value, giving a warning by displaying a blinking or striking-color bar graph is effective. The display unit 30 also displays, at the lower portion of the display window, a button for selecting whether to re-execute cleaning. That is, the photographer compares dust levels before and after cleaning to quantitatively review the cleaning effect, so that he can instruct whether to re-execute the cleaning step via the selection button.
The dust removal effect or warning information can be used as a criterion for determining whether the photographer himself should wipe the front surface of the optical element using a commercially available cleaning tool (such as a cotton bud, cleaning cloth, or blower brush).

If the photographer selects to re-execute cleaning in step S147, the process returns to step S131 to repeat steps S131 to S151. If the photographer selects in step S147 that re-cleaning is unnecessary, the process advances to step S151.

In step S151, the LED 4 is turned off. In step S153, the rear curtain of the shutter travels to close it. The stop returns to an open state. The main mirror and submirror return in the image capturing light beam. The charging motor charges the shutter curtain traveling spring to return the front curtain and rear curtain of the shutter to a traveling ready state. In step S155, the dust removal routine is completed.

The dust image enlargement process in steps S117 and S141 will be explained with reference to Figs. 6A to 7D.

In this embodiment, for example, the image sensor 15 acquires an image having a size of 3,000 pixels in the horizontal direction and 2,000 pixels in the vertical direction, i.e., a total of 6,000,000 pixels. When the photographer observes a captured image using a large-area PC monitor or high-resolution print output, he/she can easily and visually recognize even dust as small as about 10 square pixels. The photographer can recognize degradation in image quality. By contrast, the display unit 30 of the camera main body 1 can display an image having a size of 600 pixels in the horizontal direction and 400 pixels in the vertical direction, i.e., a total of 240,000 pixels. Since the display unit 30 displays a captured image at a size reduction ratio of 1/5, it displays dust at a 10-pixel level to have a size of about 2 square pixels. The photographer can hardly determine the presence/absence of dust on the display unit 30. To prevent this problem, dust alone must be enlarged without changing the size (the number of pixels) of the overall display image.

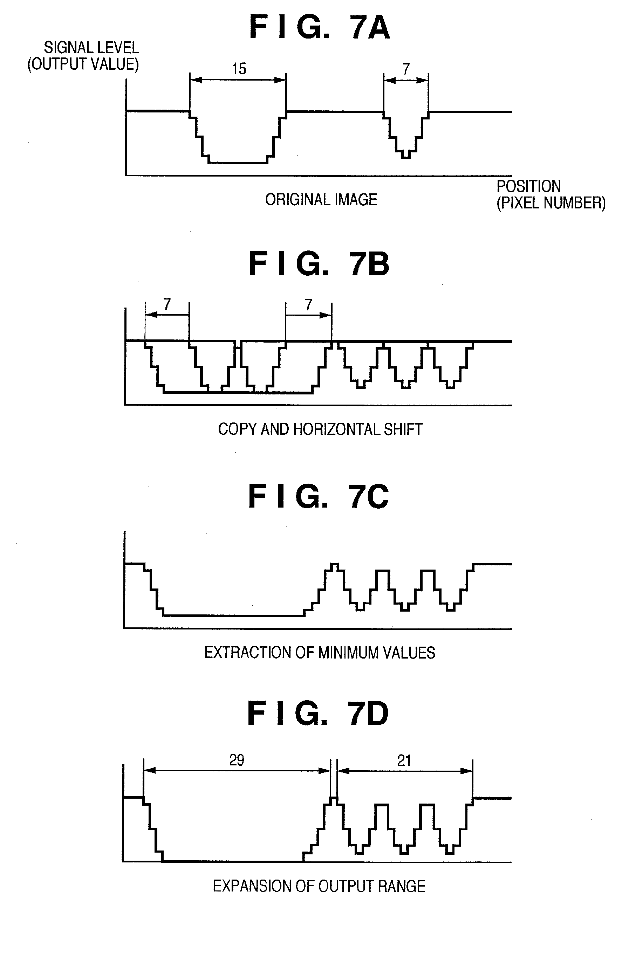

Figs. 6A and 6B are views for explaining the effect of a dust portion enlargement process. Fig. 6A shows an original image when attention is paid to one portion of the image IMG-12 acquired in step S115 of Fig. 4A. Two dust particles (one large and one small) are adjacent to each other in this region of interest. Fig. 6B shows a dust image enlarged by the method shown in Figs. 7A to 7D.

A dust region enlargement/enhancement method will be explained with reference to Figs. 7A to 7D.

Fig. 7A is a graph showing the levels of image signals on a horizontal line A - A at the middle portion of Fig. 6A. In Fig. 7A, the abscissa represents the position (pixel number) of an image on the horizontal line A - A, and the ordinate represents the signal level (output value) of a corresponding pixel. Referring to Fig. 7A, the large dust portion on the left side has a size of 15 pixels, and the small dust portion on the right side has a size of 7 pixels. Referring to Fig. 5, the light source area of the LED 4 which illuminates the image sensor is not zero. Hence, the outlines of the dust shadows in the dust image slightly blur. Furthermore, a light beam from the LED 4 reaches and illuminates the image sensor not only directly but also indirectly, i.e., after being diffused when reflected in the mirror box. Therefore, as shown in Fig. 7A, the dust image exhibits dust shadows each having a blurred boundary portion and a central portion which is not completely dark (an output value "0"), i.e., is not a rich, solid black color.

Fig. 7B shows a state in which two copies of the image shown in Fig. 7A are laid out by shifting in predetermined amounts, e.g., ±7 pixels to the left and right with respect to the original image. Fig. 7C is a graph using a minimum output level of each pixel in this state. Fig. 7D is a chart obtained by expanding (normalizing) the outputs such that the level of minimum output pixels of all pixels becomes "0" and the level of maximum output pixels becomes "1" to eliminate the poor solid black. Fig. 7D indicates that the processed two dust portions maintain the same interval between themselves but each have a dimension larger by 14 pixels.

Since the dust image is a two-dimensional image, the operation shown in Fig. 7B is also performed in its vertical direction in practice. That is, the operation subsequent to Fig. 7B is performed for four copies of the original image, which are laid out by shifting ±7 pixels vertically and horizontally. Fig. 6B shows the resulting image. Comparison between Figs. 6A and 6B reveals that the interval of the two dust portions remains the same but the large dust portion on the left side is enlarged by about twice. The four copy images of the small dust portion on the right side surround the periphery of the original small dust portion. However, the original small dust portion can be said to have been enlarged by about three times when details are neglected. Upon performing the above dust enlargement operation, the visibility of dust on the display unit 30 does not decrease even when an obtained image is reduced as a display image. To further improve the visibility, it suffices that the number of copy images described with reference to Fig. 7B increases and are laid out at smaller horizontal shift pitches. This makes it possible to further increase the dust enlargement ratio or fill image omissions of the dust portion on the right side in Fig. 6B, thus obtaining a clearer enlarged image.

Although the LED 4 is used as an illumination means to capture shadow images of dust and a wiper, image capturing is possible even without the LED 4. In this case, the main mirror 5 and submirror 7 retreat outside an image capturing light beam. The stop 83 is narrowed down to an appropriate aperture diameter. The front curtain of the focal-plane shutter travels to open it. When the photographer directs the exchangeable lens 80 to a light source indoors or to the sky outdoors, the camera main body can receive external light to acquire shadow images of dust and a wiper.

According to the above-described embodiment, the following effect can be obtained by providing a dust removing means, image capture means, and display means to a camera main body, and displaying the status of dust adhesion and the progress status of a dust removal step.

(1) An image sensor recognizes the driving operation of a dust removing means and a display unit displays this operation. A photographer can recognize with certainty that a dust removal step is done. This increases the reliability of the operation of the device.

(2) A display unit displays the progress status of a removal step by a dust removing means. A photographer can predict the time until a camera becomes ready for an image capturing operation so that he/she can avoid missing a photo opportunity.

(3) A dust region is enlarged and enhanced to allow a photographer to easily and visually recognize the adhesion status of minute dust even on a small display unit.

(4) A display unit quantitatively displays the removal effect obtained by a dust removing means. A photographer can properly determine the necessity for another removal operation. This makes it possible to avoid any damage to an optical filter or any increase in power consumption due to an unnecessary removal operation.

### (Second Embodiment)

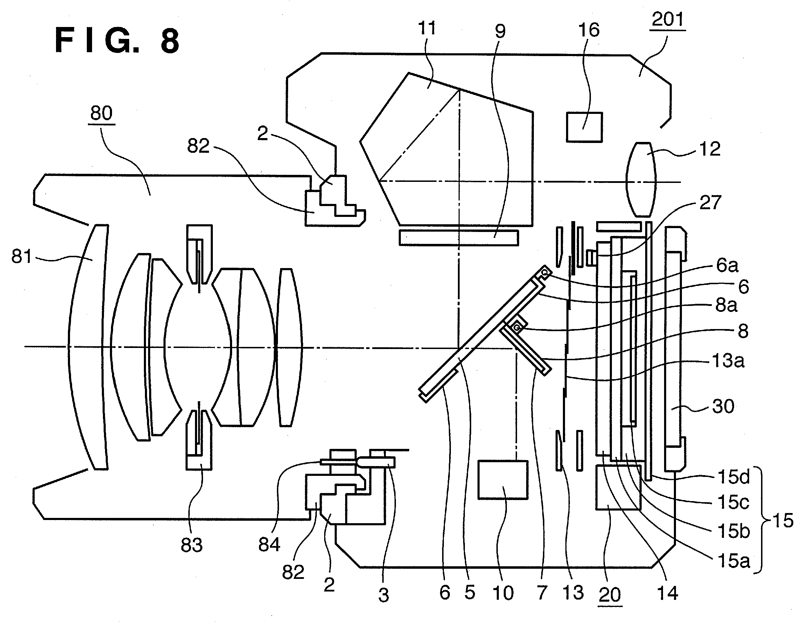

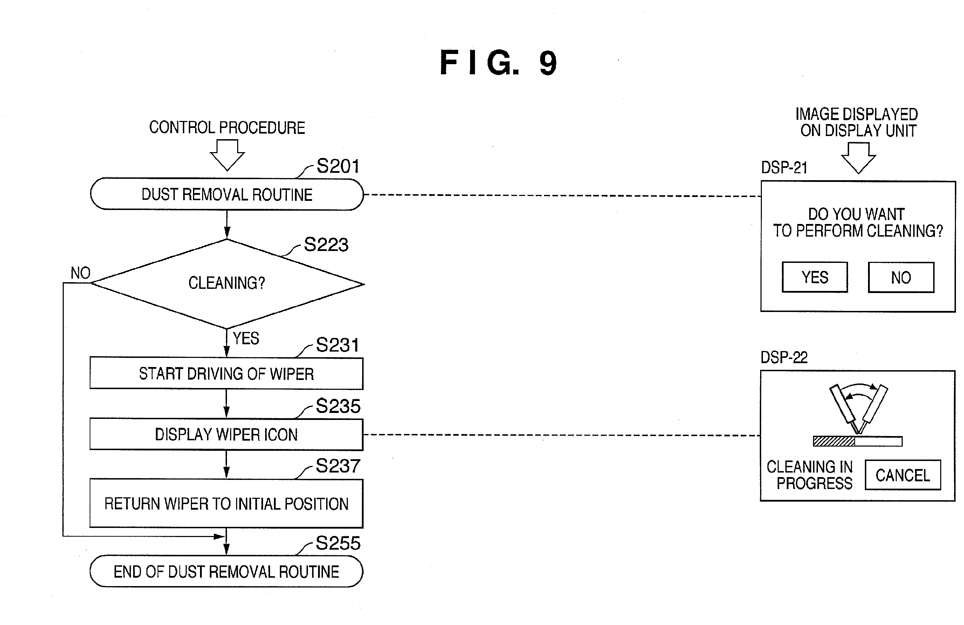

In the first embodiment, an image sensor captures an image of the operation of a dust removing member, i.e., wiper member, and a display unit displays the captured image to notify a photographer of the progress status of a dust removal step. In the second embodiment to be described hereinafter, a display unit displays an image stored in advance to notify a photographer of the progress status of a dust removal step. The operation according to the second embodiment will be explained below with reference to Figs. 8 and 9.

Fig. 8 is a sectional view showing the structure of a camera according to the second embodiment, and corresponds to Fig. 1 showing the first embodiment. The camera main body 1 according to the first embodiment has the illumination LED 4 at the bottom surface of the mirror box. However, a camera main body 201 according to the second embodiment has no illumination means and does not acquire any dust image or wiper image. Other mechanisms are almost the same as those in the first embodiment. That is, a cleaning unit 20 has the same arrangement as that shown in Figs. 2A to 2D of the first embodiment. The arrangement of an electrical circuit is almost the same as that in the first embodiment, except for omission of the LED driving circuit 54 shown in Fig. 3 of the first embodiment.

Fig. 9 is a flowchart showing a dust removal step according to the second embodiment. The procedure of Fig. 9 will be explained with reference to Figs. 2A to 3 and 8.

When the photographer operates an operation switch (not shown) to select a dust removal mode while looking at a display unit 30 attached to the back surface of the camera main body 201, a dust removal routine starts in step S201. At the same time, the display unit 30 displays a window for determining whether to execute cleaning. Reference symbol DSP-21 indicates the display contents at this time.

If the photographer selects not to execute cleaning in step S223, the process advances to step S255 to end the dust removal routine. If the photographer selects to execute cleaning in step S223, the process advances to step S231.

In step S231, a wiper 27 of the cleaning unit 20 starts driving.

In step S235, the display unit 30 sequentially displays a wiper icon (a small image which expresses a function or operation) stored in the camera CPU 41 in advance (DSP-22). In this embodiment, the display unit 30 displays, at the upper stage, an icon which expresses a scene in which a wiper reciprocates. The display unit 30 displays the progress status of the cleaning step using a bar graph at the middle stage. At the lower stage, the display unit 30 displays a message indicating that the cleaning step is in progress, and also displays a cleaning step cancel button.

In step S237, the wiper 27 returns to the initial position after it is determined that the wiper 27 has completed downward scanning. In step S255, the dust removal routine is completed.

According to the above-described embodiment, the following effect can be obtained by providing a dust removing means, image capture means, and display means to a camera main body, and, while a dust removal step is in progress, displaying an image prepared beforehand and the progress status of the dust removal step.

(1) It is possible to clearly notify a photographer of a step being performed by a camera to relieve his/her irritation.

(2) A photographer can predict the time until a camera becomes ready for an image capturing operation so that he/she can avoid missing any photo opportunity.

(3) An illumination means for capturing an image of a dust removing means is unnecessary. A camera main body can be smaller in size and less expensive than in the first embodiment.

### (Third Embodiment)

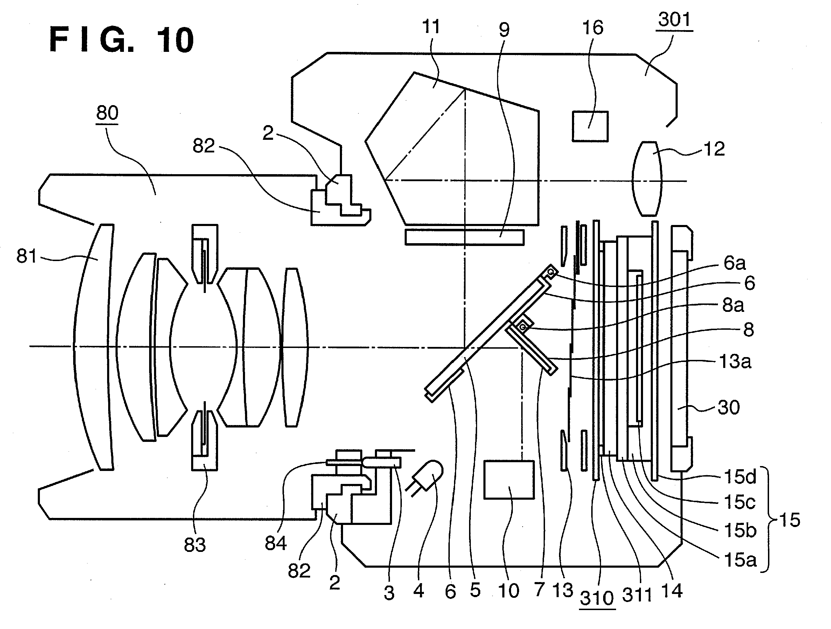

A dust removing means according to each of the first and second embodiments comprises a wiper member which wipes the surface of an optical filter. However, a mechanism according to the third embodiment to be described hereinafter vibrates an optical member using ultrasound to remove dust. The operation according to the third embodiment will be explained with reference to Figs. 10 to 13B.

Fig. 10 is a sectional view showing the structure of a camera according to the third embodiment, and corresponds to Fig. 1 showing the first embodiment. The camera main body 1 according to the first embodiment comprises the wiper type cleaning unit 20 immediately before the optical filter 14. However, a camera main body 301 according to the third embodiment has an ultrasound vibration type cleaning unit 310 arranged immediately before an optical filter 14 via an elastic sealing member 311. Other constituent components are the same as those in the first embodiment, and a description thereof will be omitted.

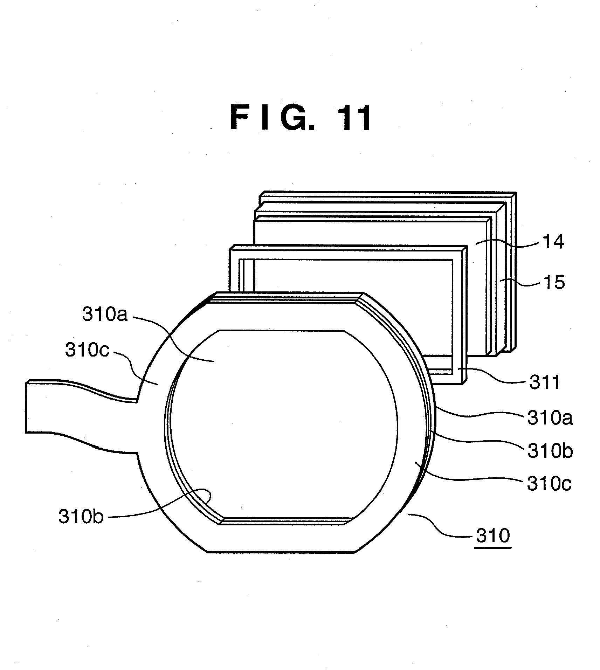

Fig. 11 is a perspective view showing the structure of a cleaning unit according to the third embodiment.

Referring to Fig. 11, reference numeral 15 denotes an image sensor similar to that in the first embodiment. The optical filter 14 is also similar to that in the first embodiment. An adhesive or a coupling member (not shown) integrally couples the image sensor 15 and optical filter 14. Reference numeral 310 denotes a cleaning unit which includes three members 310a, 310b, and 310c. Reference numeral 310a denotes a transparent plate made of transparent optical glass without any optical power. Reference numeral 310b denotes a piezoelectric transducer which is fixed to the front surface of the transparent plate 310a with an adhesive outside the path of an image capturing light beam. The piezoelectric transducer 310b has undergone a predetermined polarization process. Reference numeral 310c denotes a flexible printed circuit board which has a conducting pattern corresponding to the polarization pattern of the piezoelectric transducer 310b, and is bonded to the piezoelectric transducer 310b with a conductive adhesive.

The sealing member 311 is formed from a resilient or elastic member such as a band-like rubber sheet having a window at its central portion. The optical filter 14 is coupled with the cleaning unit 310 via the sealing member 311 by bonding. The sealing member 311 and the back surface of the transparent plate 310a of the cleaning unit 310 surround the front surface of the optical filter 14 to form an enclosed space. This prevents dust from entering this space, so no dust ever adheres to the surface of the optical filter 14. To the contrary, the front surface of the transparent plate 310a exposes to the space in the camera, so dust adheres to it.

With the above arrangement, when an AC signal at a predetermined frequency is supplied to the piezoelectric transducer 310b via the flexible printed circuit board 310c, bending forces act on the transparent plate 310a in accordance with the expansion and contraction of the piezoelectric transducer 310b. This makes it possible to remove dust adhering to the front surface of the transparent plate 310a. As the elastic sealing member 311 couples the cleaning unit 310 to the optical filter 14 with a flexible structure, the cleaning unit 310 never suffers inhibition of vibration.

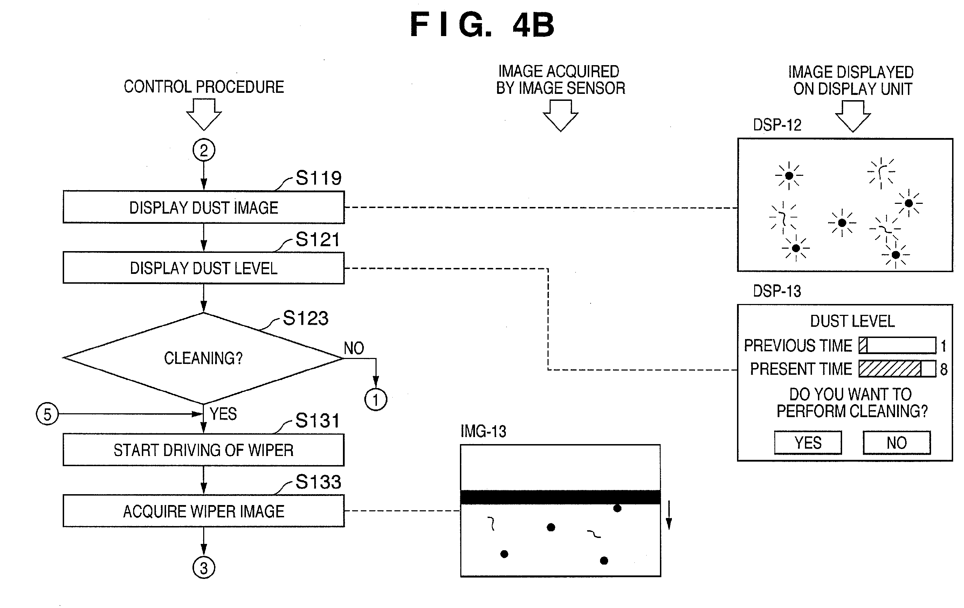

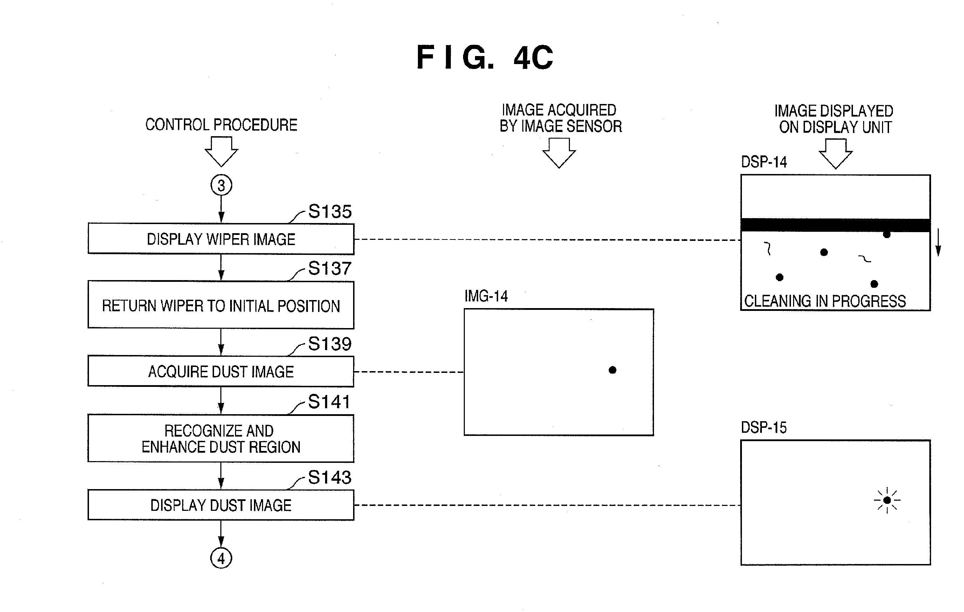

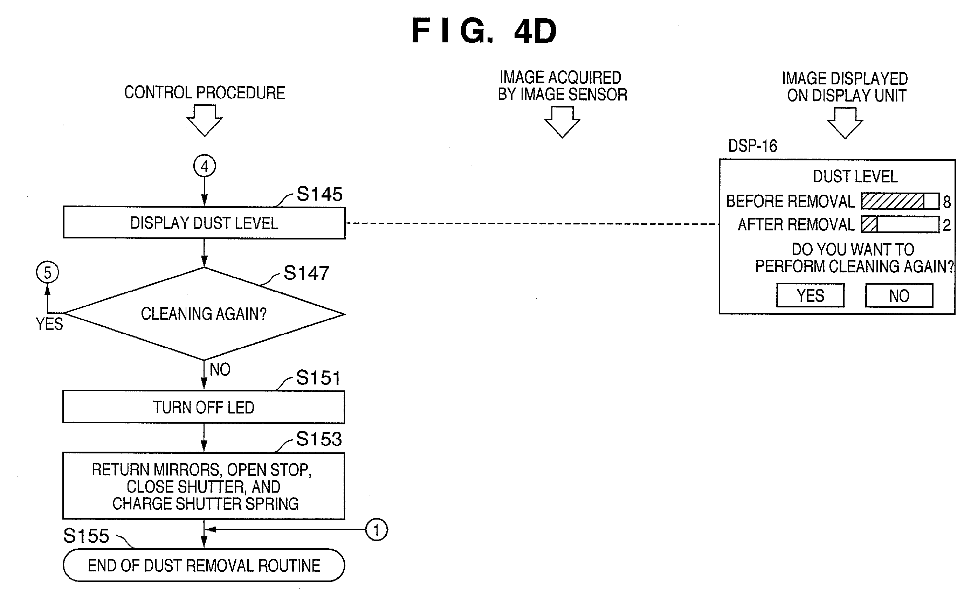

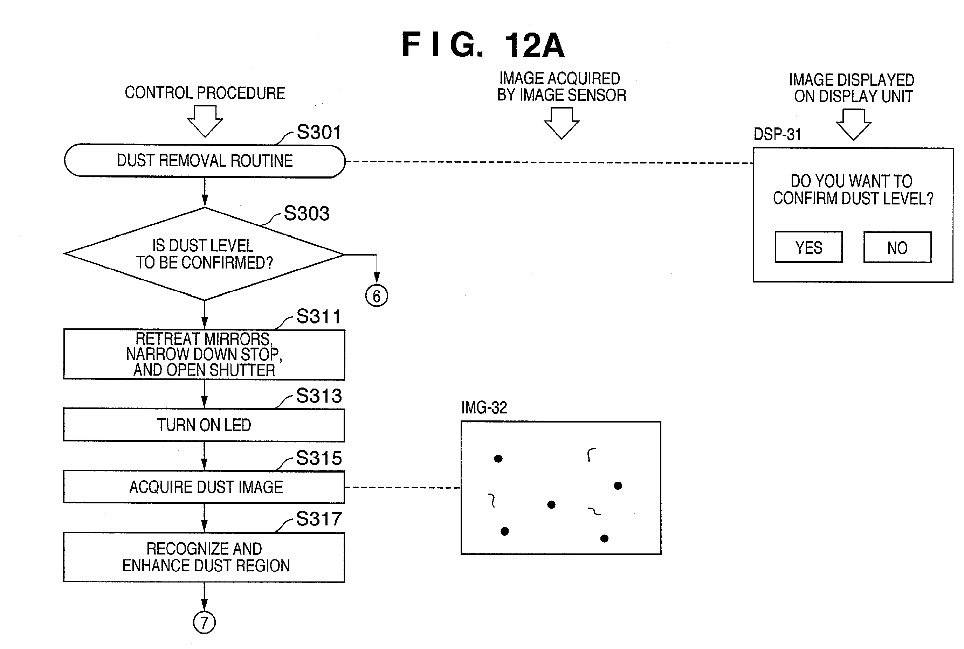

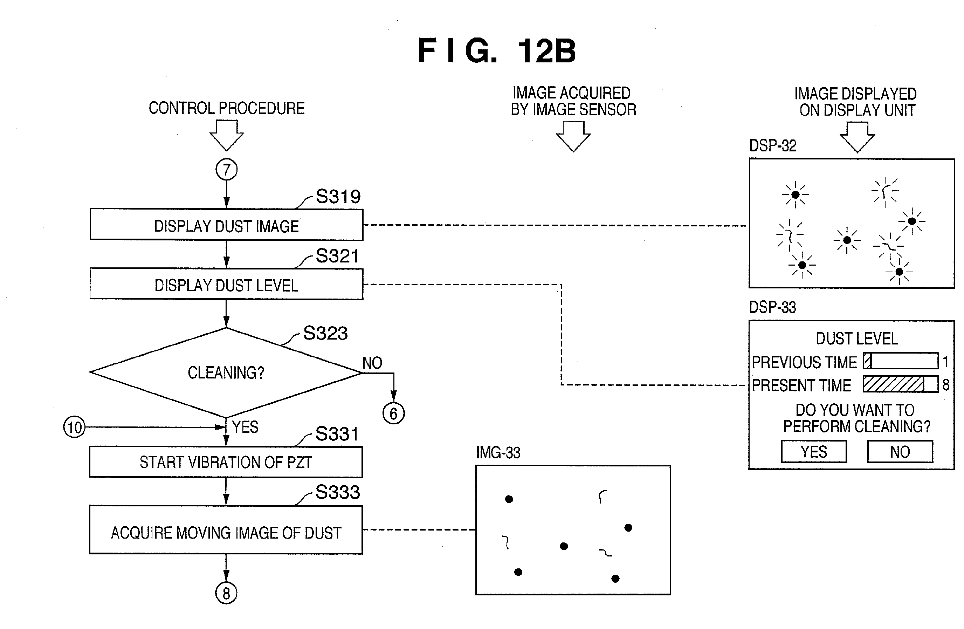

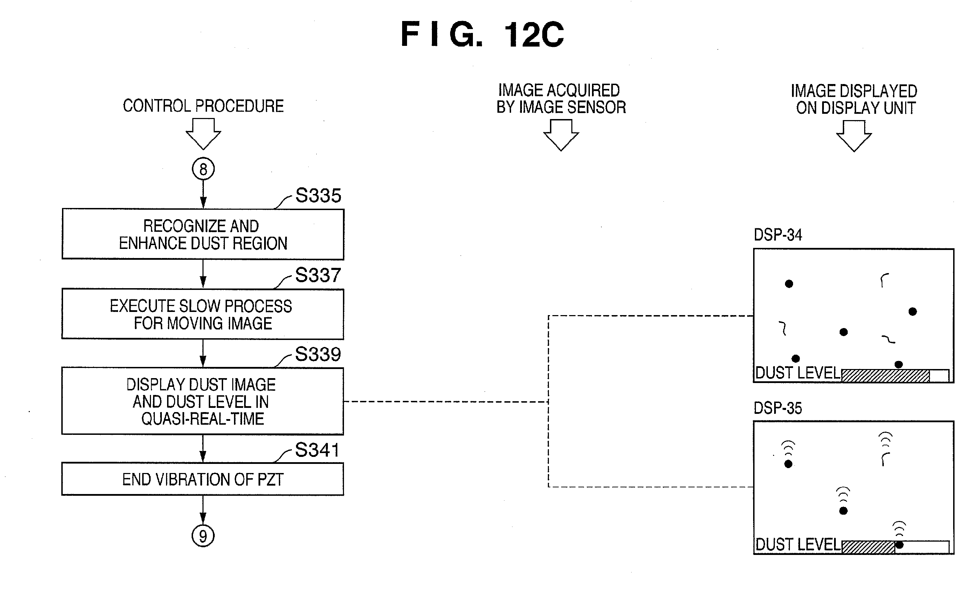

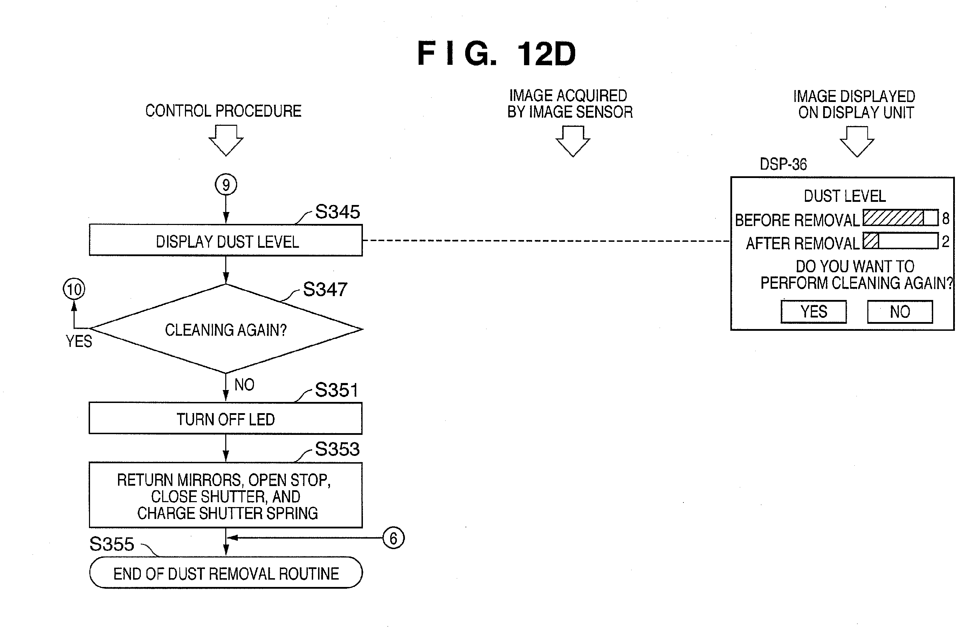

Figs. 12A to 12D are flowcharts showing a dust removal step according to the third embodiment. Figs. 12A to 12D show the control procedure in the left column, images acquired by the image sensor 15 in the middle column, and the contents of images displayed on a display unit 30 in the right column, like Fig. 4 of the first embodiment. Each broken line connects one of the acquired images and displayed images to a corresponding control step. The procedure shown in Figs. 12A to 12D will be explained with reference to Figs. 10 and 11.

When the photographer operates an operation switch (not shown) to select a dust removal mode while looking at the display unit 30 attached to the back surface of the camera main body 301, a dust removal routine starts in step S301. The display unit 30 displays a window for determining whether to confirm the dust level. Reference symbol DSP-31 indicates the display contents at this time.

If the photographer selects not to confirm the dust level in step S303, the process advances to step S355 to end the dust removal routine. If the photographer selects to confirm the dust level in step S303, the process advances to step S311.

In step S311, a main mirror 5 and submirror 7 retreat outside an image capturing light beam. A stop 83 is narrowed down to a minimum stop aperture diameter. The front curtain of a focal-plane shutter travels to open it.

An LED 4 is turned on in step S313. The light from the LED 4 illuminates a sensor chip 15c via the transparent plate 310a in the cleaning unit 310, the optical filter 14, and a cover glass 15a of the image sensor 15. This produces a similar effect as in the first embodiment to project the shadow of dust adhering to the surface of the transparent plate 310a onto the sensor chip 15c.

In step S315, the image sensor 15 accumulates and reads out images to acquire an image indicated by reference symbol IMG-32. This image represents a state in which black points having various shapes corresponding to the shadows of dust particles adhering to the surface of the transparent plate 310a scatter in a light region almost uniformly illuminated with the LED 4.

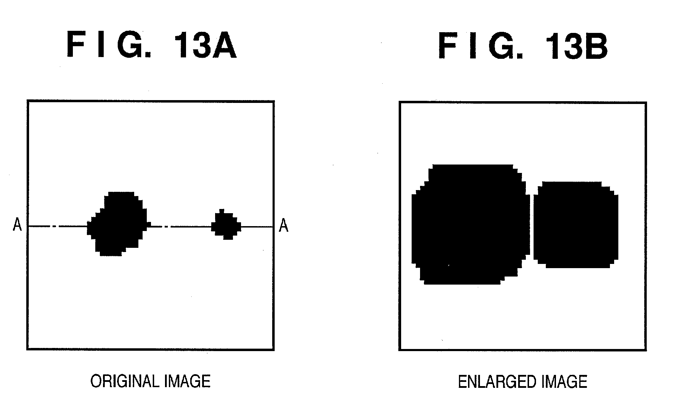

In step S317, a dust region is extracted from the image acquired in step S315 and a display image is enhanced. Since a technique disclosed in Japanese Patent Laid-Open No. 2003-23563 which was filed by the present applicant is available as a practical method, a detailed description thereof will be omitted. The extracted dust image undergoes dust portion enlargement and contrast enhancement. A practical approach to these processes will be described later with reference to Figs. 13A to 14E.

In step S319, the display unit 30 blinks the dust portions in the enlarged image to notify the photographer of the status of dust adhesion (DSP-32).

In step S321, the display unit 30 displays the dust level (a value which expresses the dust amount, such as the number of dust portions) calculated in step S317 (DSP-33). The display format in this embodiment is the same as that in the first embodiment. The display unit 30 quantitatively displays, using bar graphs and/or numerical values, both a dust level recognized at the previous time and a dust level recognized at the present time. The display unit 30 also displays, at the lower portion of the display window, a button for selecting whether to execute cleaning. That is, the photographer compares dust levels at the previous time and present time, and instructs whether to execute the cleaning step via the selection button.

If the photographer selects in step S323 that the cleaning operation is unnecessary, the process advances to step S355 to end the dust removal routine. If the photographer selects to execute the cleaning step in step S323, the process advances to step S331.

In step S331, the piezoelectric transducer (PZT) 310b of the cleaning unit 310 starts driving (vibration).

In step S333, a moving image of dust which separates from the surface of the transparent plate 310a upon driving the piezoelectric transducer 310b is acquired (IMG-33). The moving image here indicates a set of still images acquired at a predetermined time interval, and is recorded at a frame rate of, e.g., 30 images per sec (30 frames/sec). In step S335, the respective images (still images) of the acquired moving image undergo the same enhancement process as in step S317.

In step S337, the moving image enhanced in step S335 undergoes a slow process. This is because dust separates from the transparent plate 310a within a very short period of time, e.g., within 0.1 sec when the piezoelectric transducer 310b starts vibration in step S331. At this time, when the display unit 30 displays the acquired moving image at the same frame, it is difficult for the photographer to visually recognize the process of separation of dust. In view of this, the acquired moving image is enlarged to, e.g., 10 times on the time axis, i.e., converted into images as slow as 3 frames/sec.

In step S339, the display unit 30 sequentially displays the slow images generated in step S337 (DSP-34 and DSP-35). Dust which separates in the normal direction of the transparent plate 310a gradually comes to have a blurred outline and disappears. The display unit 30 displays a scene in which dust which has lost adhesive power upon vibration cannot separate from the transparent plate 310a and falls by gravity. In this embodiment, the display unit 30 displays the dust level using a bar graph at the lower end of the dust display window. Such display allows the photographer to review the progress status of the dust removal step on the basis of two pieces of information, i.e., an image of dust itself and the dust level.

In step S341, the piezoelectric transducer 310b stops vibration a predetermined period of time after it starts vibration in step S331.

In step S345, a dust image is acquired in the same manner as in step S315. In step S345, the display unit 30 displays the dust level in the same manner as in step S321 (DSP-36). In this embodiment, like the first embodiment, the display unit 30 quantitatively displays, using bar graphs and/or numerical values, both dust levels before and after cleaning. The display unit 30 also displays, at the lower portion of the display window, a button for selecting whether to re-execute cleaning. The photographer compares dust levels before and after cleaning to quantitatively review the cleaning effect, so that he/she can instruct whether to re-execute the cleaning step via the selection button.

If the photographer selects to re-execute cleaning in step S347, the process returns to step S331 to repeat steps S331 to S345. If the photographer selects in step S347 that re-cleaning is unnecessary, the process advances to step S351.

In step S351, the LED 4 is turned off. In step S353, the rear curtain of the shutter travels to close it. The stop returns to an open state. The main mirror and submirror return in the image capturing light beam. The charging motor charges the shutter curtain traveling spring to return the front curtain and rear curtain of the shutter to a traveling ready state. In step S355, the dust removal routine is completed.

The dust image enhancement (enlargement process) in steps S317 and S335 will be explained with reference to Figs. 13A to 14E.

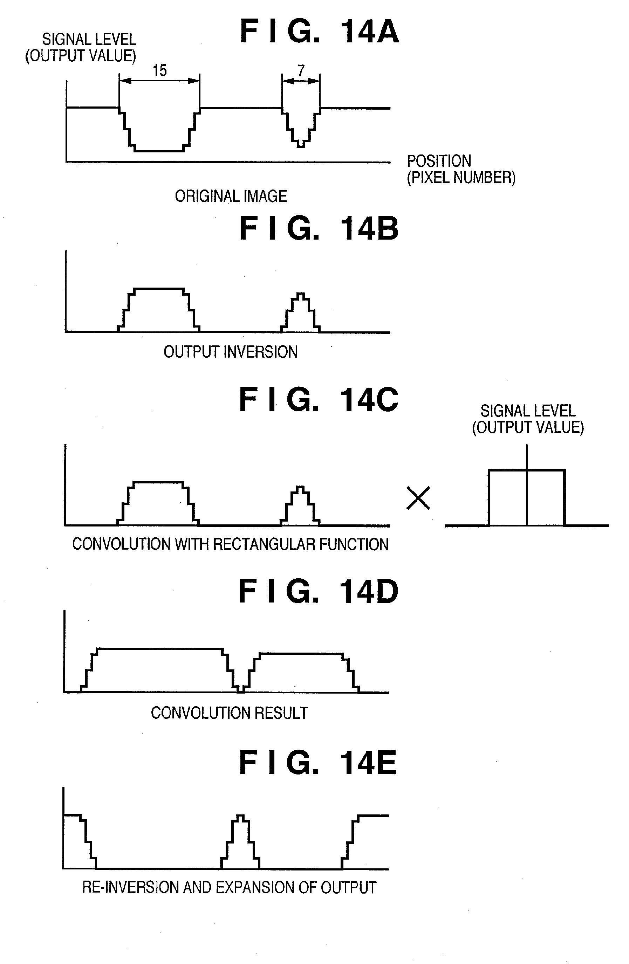

Figs. 13A and 13B are views for explaining the effect of a dust portion enlargement process, and correspond to Figs. 6A and 6B of the first embodiment. Fig. 13A shows an original image when attention is paid to one portion of the image IMG-32 acquired in step S315 of Fig. 12A. One large and one small dust particle are adjacent each other in this region of interest. Fig. 13B shows a dust image enlarged by the method shown in Figs. 14A to 14D.

A dust region enlargement/enhancement method will be explained with reference to Figs. 14A to 14E.

Fig. 14A is a graph showing the levels of image signals on a horizontal line A - A at the middle portion of Fig. 13A. In Fig. 14A, the abscissa represents the position (pixel number) of an image on the horizontal line A - A, and the ordinate represents the signal level (output value) of a corresponding pixel. Referring to Fig. 14A, like Fig. 6A of the first embodiment, the large dust portion on the left side has a size of 15 pixels, and the small dust portion on the right side has a size of 7 pixels.

Fig. 14B is a chart when the image output shown in Fig. 14A is inverted.

Referring to Fig. 14C, convolution of the inverted output of the dust shadow image and a rectangular signal having a predetermined width per unit height is calculated. Convolution calculated here means blurring and enlarging the original image by the width of a rectangular signal.

Fig. 14D shows image signals as a result of convolution calculation.

Fig. 14E is a chart when the output is inverted again. Fig. 14E reveals that the processed two dust portions maintain the same interval between themselves but each have a larger dimension by the width of the rectangular function used in Fig. 14C via convolution calculation.

Since the dust image is a two-dimensional image, the operation shown in Fig. 14C is also performed in its vertical direction in practice. That is, the original image undergoes two-dimensional convolution calculation. Fig. 13B shows the resultant image.

Comparison between Figs. 13A and 13B reveals that the two dust portions maintain the same interval between themselves but are enlarged by an amount corresponding to the width of the rectangular function shown in Fig. 14C. With the above dust enlargement operation, the visibility of dust on the display unit 30 does not decrease even when an obtained image is reduced as a display image. To further improve the visibility, it suffices that the width of the rectangular function described with reference to Fig. 14C increases.

According to the above-described embodiment, the following effect can be obtained by providing a dust removing means, image capture means, and display means to a camera main body, and displaying the status of dust adhesion and the progress status of dust removal.

(1) A display unit acquires and displays a dust image in a dust removal step. A photographer can visually check a scene in which dust separates from an optical member. This increases the reliability of the operation of the device and the dust removal effect.

(2) A display unit plays back a moving image in slow motion, which is obtained by recording the separation status of dust. A photographer can visually recognize dust which instantaneously separates.

(3) A dust region is enlarged and enhanced to allow a photographer to easily, visually recognize the adhesion status of minute dust even on a small display unit.

(4) A display unit quantitatively displays the removal effect obtained by a dust removing means. A photographer can properly determine the necessity for another removal operation. This makes it possible to avoid wasteful power consumption due to an unnecessary removal operation.

### (Fourth Embodiment)

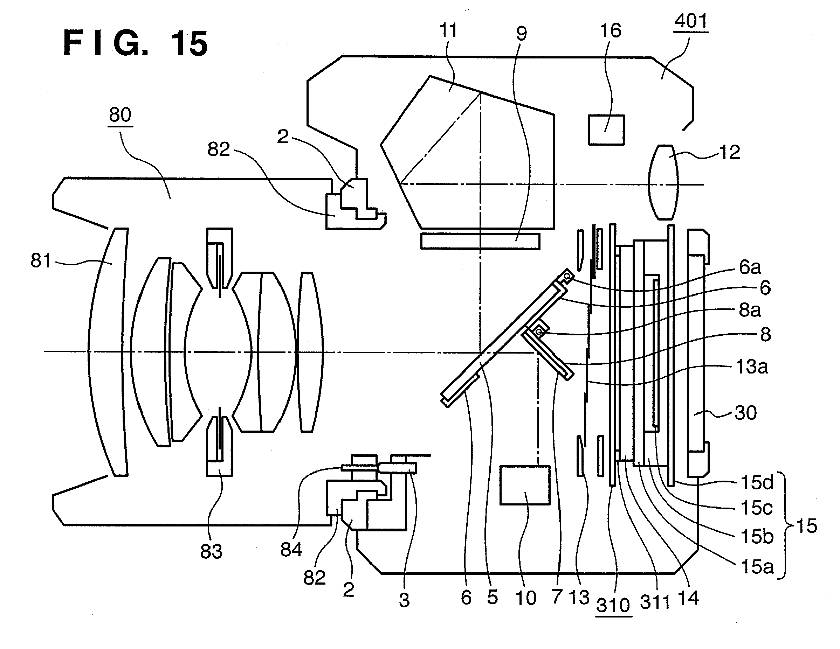

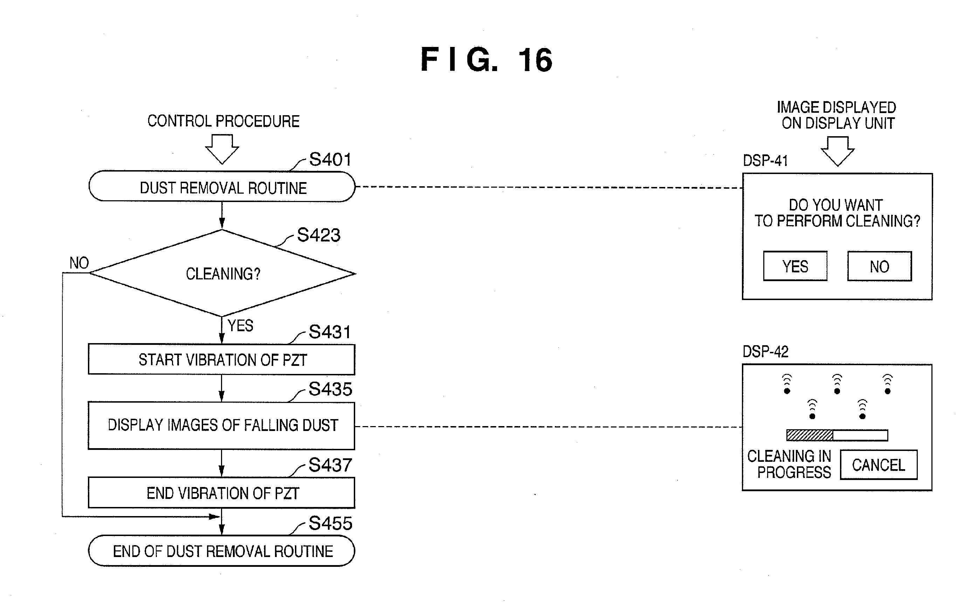

In the third embodiment, an image sensor captures images of the process of separation of dust removed from the surface of an optical member during vibration of a piezoelectric transducer, and a display unit displays the captured images in quasi-real-time to notify a photographer of the progress status of a dust removal step. In the fourth embodiment to be described hereinafter, a display unit displays an image stored in advance to notify a photographer of the progress status of a dust removal step. The operation according to the fourth embodiment will be explained with reference to Figs. 15 and 16.

Fig. 15 is a sectional view showing the structure of a camera according to the fourth embodiment, and corresponds to Fig. 10 of the third embodiment. The camera main body 301 according to the third embodiment has the illumination LED 4 at the bottom surface of the mirror box. However, a camera main body 401 according to the fourth embodiment has no illumination means and does not acquire any dust image. Other mechanisms are almost the same as those in the third embodiment. That is, a cleaning unit 310 has the same arrangement as that shown in Fig. 11 of the third embodiment.

Fig. 16 is a flowchart showing a dust removal step according to the fourth embodiment. The procedure of Fig. 16 will be explained with reference to Figs. 11 and 15.

When the photographer operates an operation switch (not shown) to select a dust removal mode while looking at a display unit 30 attached to the back surface of the camera main body 401, a dust removal routine starts in step S401. The display unit 30 displays a window for determining whether to execute cleaning. Reference symbol DSP-41 indicates the display contents at this time.

If the photographer selects not to execute cleaning in step S423, the process advances to step S455 to end the dust removal routine. If the photographer selects to execute cleaning in step S423, the process advances to step S431.

In step S431, a piezoelectric transducer (PZT) 310b of the cleaning unit 310 starts driving.

In step S435, the display unit 30 sequentially displays images of falling dust stored in a camera CPU 41 in advance (DSP-42). In this embodiment, the display unit 30 displays, at the upper stage, a moving image as an animation which expresses a scene in which dust falls and is removed. The display unit 30 displays the progress status of the cleaning step using a bar graph at the middle stage. At the lower stage, the display unit 30 displays a message indicating that the cleaning step is in progress, and also displays a cleaning step cancel button.

After the elapse of a predetermined cleaning execution time, the process advances to step S437. A piezoelectric transducer 310b stops driving. In step S455, the dust removal routine is completed.

According to the above-described embodiment, the following effect can be obtained by providing a dust removing means, image capture means, and display means to a camera main body, and, while a dust removal step is in progress, displaying an image prepared beforehand and the progress status of the dust removal step.

(1) It is possible to clearly notify a photographer of a step being performed by a camera to relieve his/her irritation.

(2) A photographer can predict the time until a camera becomes ready for an image capturing operation so that he/she can avoid missing any photo opportunity.

(3) An illumination means for capturing an image of a dust removing means is unnecessary. A camera main body can be smaller in size and less expensive than in the third embodiment.

### (Other Embodiment)

The object of each embodiment is achieved even by the following method. That is, a storage medium (or recording medium) which records software program codes for implementing the functions of the above-described embodiments is supplied to the system or apparatus.
The computer (or CPU or MPU) of the system or apparatus reads out and executes the program codes stored in the storage medium. In this case, the program codes read out from the storage medium implement the functions of the above-described embodiments by themselves, and the storage medium which stores the program codes constitutes the present invention. In addition to the case in which the functions of the above-described embodiments are implemented when the readout program codes are executed by the computer, the present invention incorporates the following case. That is, the functions of the above-described embodiments are implemented when the operating system (OS) running on the computer performs part or all of actual processing on the basis of the instructions of the program codes.

The present invention also incorporates the following case. That is, the program codes read out from the storage medium are written in the memory of a function expansion card inserted into the computer or a function expansion unit connected to the computer. After that, the functions of the above-described embodiments are implemented when the CPU of the function expansion card or function expansion unit performs part or all of actual processing on the basis of the instructions of the program codes.

When the present invention is applied to the storage medium, the storage medium stores program codes corresponding to the above-described procedures.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. An image capturing apparatus comprising:
image capture means (15) for photo-electrically converting an object image;
an optical element (14) arranged nearer to an object than a light-receiving section of said image capture means;
foreign substance removing means (27) adapted to remove a foreign substance adhering to a surface of said optical element; and
display means (30) for displaying a status of foreign substance removal by said foreign substance removing means using a video image acquired by said image capture means during operation of said foreign substance removing means.

2. The apparatus according to claim 1, wherein said display means displays a video image which is acquired by said image capture means and shows a behavior of a foreign substance accompanied by the operation of said foreign substance removing means.

3. The apparatus according to claim 1, wherein said display means displays information associated with existence statuses of a foreign substance before and after the foreign substance removal operation by said foreign substance removing means.

4. A control method for an image capturing apparatus which comprises image capture means (15) for photo-electrically converting an object image, and an optical element (14) arranged nearer to an object than a light-receiving section of the image capture means, comprising:
a foreign substance removal step (S131) of causing foreign substance removing means (27) to remove a foreign substance adhering to a surface of the optical element; and
a display step (S135) of displaying a status of foreign substance removal by the foreign substance removing means in the foreign substance removal step using a video image acquired by the image capture means during an operation of the foreign substance removing means.

5. A computer program which when loaded into a computer and executed performs a method as claimed in claim 4.
